# EUROPEAN PATENT SPECIFICATION

(11) **EP 4 395 126 B1**
(45) Date of publication and mention of the grant of the patent: **06.05.2026**
(21) Application number: 23780914.0
(22) Date of filing: 30.03.2023
(51) Int. Cl.: H02J 50/30, B64D 27/24, H02J 50/90

(54) **LASER DEVICE, PROGRAM, SYSTEM, AND METHOD**
LASERVORRICHTUNG, PROGRAMM, SYSTEM UND VERFAHREN
DISPOSITIF LASER, PROGRAMME, SYSTÈME ET PROCÉDÉ

(30) Priority: 30.03.2022 JP 2022057753
(43) Date of publication of application: 03.07.2024
(73) Proprietor: SoftBank Corp., Minato-ku Tokyo 1057529 (JP); KAWASAKI JUKOGYO KABUSHIKI KAISHA, Chuo-ku Kobe-shi Hyogo 650-8670 (JP)
(72) Inventor: TAJIKA, Akihiko, Minato-ku, Tokyo 1057529 (JP); WANI, Fumio, Chuo-ku, Kobe, Hyogo 6508680 (JP)
(74) Representative: Michalski Hüttermann & Partner Patentanwälte mbB
(86) International application number: PCT/JP2023/013260
(87) International publication number: WO 2023/190906

(56) References cited:
- JP-A- 2016 171 616
- JP-A- 2016 171 616
- JP-A- 2019 013 063
- JP-A- 2019 511 407
- KR-A- 20150 102 153
- KR-A- 20180 094 943
- US-A1- 2018 123 403

## Description

### BACKGROUND

### 1. TECHNICAL FIELD

The present invention relates to a laser device, a program, a system, and a method.

### 2. RELATED ART

Japanese Patent Application Publication No. 2020-006916 discloses a management device which can make an unmanned flight body fly stably and easily, by generating a flight route using a range of a land lot in which a railroad line is provided and which is possessed by a railroad undertaker. Japanese Patent Application Publication No. 2019-129678 discloses a power transmission device that wirelessly transmits power to an electronic device. KR 2018 0094943 A describes a system which includes a laser configured to generate a laser beam and a laser aiming module configured to aim the laser such that the laser beam is at least partially incident on a solar cell that is located remotely and continuously moves. The system also includes a controller configured to receive a feedback signal indicating a position of the laser beam relative to the solar cell, which is located remotely and continuously moves, and to instruct the laser aiming module to adjust the aiming of the laser beam based on the feedback signal. KR 2015 0102153 A describes a a system and a method for wireless power supply of a remotely piloted vehicle. The system for wireless power supply of a remotely piloted vehicle includes: a laser transmitting part which includes a laser radiation part for radiating a laser beam; and the remotely piloted vehicle where a photoelectric device for converting the laser beam radiated from the laser radiation part into an electric signal is installed on one outer side. The remotely piloted vehicle further includes a battery which is charged by the electric signal converted from the laser beam through the photoelectric device. The laser transmission part further includes a driving part which controls the direction of the laser radiation part according to the position of the photoelectric device.

### GENERAL DISCLOSURE

The invention is defined by the independent claims. Embodiments of the invention are described in the dependent claims. An embodiment of the present invention provides a laser device. The laser device includes an output unit which outputs laser light. The laser device includes a receiving unit which receives position information indicating a position of a moving object. The laser device includes an image capture unit which captures an image of light from the moving object. The laser device includes a control unit which controls an output of the laser light such that more of the laser light is radiated to a photovoltaic panel mounted on the moving object, based on the position of the moving object indicated by the position information and a captured image that is captured by the image capture unit.

The image capture unit may capture an image of the light emitted by a light source installed at a position corresponding to the photovoltaic panel. The image capture unit may capture an image of the light obtained by a reflection plate installed around the photovoltaic panel, reflecting the laser light. The image capture unit may capture an image of the light that has passed through a band-pass filter which passes only light in a wavelength band in a predetermined range including a wavelength of the laser light.

The control unit may control a radiation direction of the laser light such that a distance between a center of the laser light and a center of the photovoltaic panel becomes shorter. The control unit may control the radiation direction of the laser light, by analyzing the image of the captured image, and specifying a position of the center of the photovoltaic panel. The control unit may control a shape of the laser light such that a shape error between the shape of the laser light and a shape of the photovoltaic panel becomes smaller. The control unit may control the shape of the laser light to be an ellipse, and an aspect ratio and an orientation of the ellipse are able to be controlled by the control unit. The control unit may control an intensity distribution of the laser light such that the intensity distribution of the laser light becomes more uniform on the photovoltaic panel. The control unit may control at least one of a shape or an intensity distribution of the laser light such that electric power generated by the photovoltaic panel which has received the laser light, is maximized. The control unit may control a beam diameter of the laser light such that a ratio of a size of the laser light to a size of the photovoltaic panel becomes a predetermined ratio.

The receiving unit may further receive movement speed information indicating a movement speed of the moving object, and movement direction information indicating a movement direction of the moving object. The control unit may control the output of the laser light such that the laser light tracks the photovoltaic panel, further based on the movement speed of the moving object indicated by the movement speed information, and the movement direction of the moving object indicated by the movement direction information. The control unit may determine a target ratio of a size of the laser light to a size of the photovoltaic panel, based on a track result obtained by the laser light tracking the photovoltaic panel; and controls a beam diameter of the laser light such that the ratio of the size of the laser light to the size of the photovoltaic panel becomes the target ratio which has been determined.

The receiving unit may receive environmental information indicating an environment around the moving object, and
The control unit may control the output of the laser light, further based on the environmental information. The control unit may control a timing of outputting the laser light such that the laser light is not radiated to an object which exists around a path of the laser light. When an object exists behind the moving object, the control unit may control a beam diameter of the laser light such that a size of the laser light becomes smaller than a size of the photovoltaic panel by a predetermined ratio.

An embodiment of the present invention provides a program for causing a computer to function as the laser device.

An embodiment of the present invention provides a system. The system includes the laser device. The system includes the moving object.

An embodiment of the present invention provides a method which is executed by a computer. The method includes receiving position information indicating a position of a moving object. The method includes capturing an image of light from the moving object. The method includes controlling an output of laser light such that more of the laser light is radiated to a photovoltaic panel mounted on the moving object, based on the position of the moving object indicated by the position information and a captured image that is captured by the capturing the image.

The summary clause does not necessarily describe all necessary features of the embodiments of the present invention. The present invention may also be a sub-combination of the features described above.

### BRIEF DESCRIPTION OF THE DRAWINGS

Fig. 1 schematically shows an example of a system 10.
Fig. 2 schematically shows an example of a functional configuration of a laser device 100.
Fig. 3 schematically shows an example of a photovoltaic panel 250.
Fig. 4 schematically shows an example of a captured image.
Fig. 5 schematically shows another example of the photovoltaic panel 250.
Fig. 6 schematically shows another example of the captured image.
Fig. 7 is an illustration for describing an example of a processing flow of the laser device 100.
Fig. 8 schematically shows an example of a hardware configuration of a computer 1200 which functions as the laser device 100.

### DESCRIPTION OF EXEMPLARY EMBODIMENTS

A stratospheric unmanned aerial vehicle which relies only on sunlight for power supply, has a problem of a power shortage at night. One effective solution is to wirelessly feed power, by a radio wave, to an aerial vehicle which flies at a high altitude; however, long-distance wireless power feeding has yet to be realized because there are issues of a radio wave regulation, an influence on a communication satellite, or the like, and a technical difficulty as well. Further, similarly to the stratospheric unmanned aerial vehicle, a drone or the like also has a problem of energy, which makes it difficult to fly for a long time. In a system 10 according to an embodiment, for example, a solar panel is installed on a lower surface of a HAPS (High Altitude Platform Station) or the drone, and laser light output by a laser device arranged on the ground, is constantly concentrated into the solar panel, thereby causing the solar panel to generate electricity.

Hereinafter, the present invention will be described through embodiments of the invention, but the following embodiments do not limit the invention according to claims. In addition, not all of the combinations of features described in the embodiments are essential to the solution of the invention.

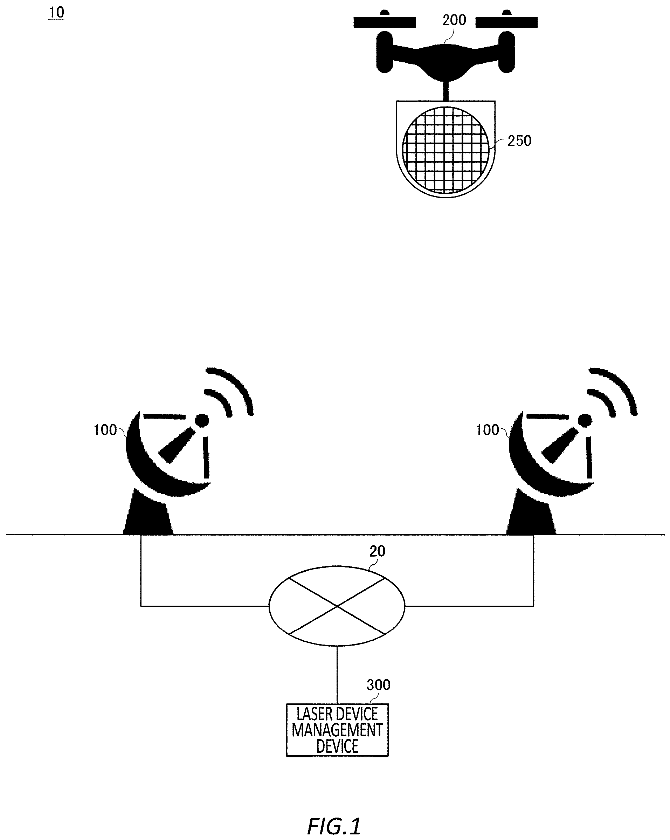

Fig. 1 schematically shows an example of the system 10. The system 10 may include a laser device 100 and a moving object 200. The system 10 may include a laser device management device 300.

The laser device 100 may have a function of wireless power feeding. For example, the laser device 100 may wirelessly feed the power to the moving object 200. The laser device 100 may wirelessly feed the power to the moving object 200, for example, by radiating the laser light to a photovoltaic panel 250 mounted on the moving object 200.

The laser device 100 may have, for example, a function of accessing a network 20. For example, the laser device 100 may directly access the network 20. For example, the laser device 100 may access the network 20 via a base station on the ground. For example, the laser device 100 may access the network 20 via a HAPS. The laser device 100 may access the network 20 via the communication satellite.

The network 20 may include, for example, a core network that is provided by a telecommunications carrier. The core network may be compliant with, for example, a 5G (5th Generation) communication system. The core network may be compliant with a mobile communication system of a 6G (6th Generation) communication system onwards. The core network may be compliant with a 3G (3rd Generation) communication system. The core network may be compliant with an LTE (Long Term Evolution) communication system. The network 20 may include the Internet.

The laser device 100 may have, for example, a function of wirelessly communicating with the moving object 200. The wireless communication between the laser device 100 and the moving object 200 may be, for example, compliant with a wireless communication system such as Wi-Fi (registered trademark), a microwave, an optical communication, Bluetooth (registered trademark), and ZigBee (registered trademark). The laser device 100 may wirelessly communicate with the moving object 200 via the network 20.

For example, the laser device 100 may receive, from the moving object 200, position information indicating a position of the moving object 200. The position information of the moving object 200 may include, for example, longitude information indicating a longitude of the moving object 200. The position information of the moving object 200 may include, for example, latitude information indicating a latitude of the moving object 200. The position information of the moving object 200 may include, for example, altitude information indicating an altitude of the moving object 200.

The laser device 100 may have, for example, a function of controlling the laser light. For example, the laser device 100 may generate a laser light control signal for controlling the laser light, to control the laser light according to the generated laser light control signal.

The laser device 100 may control the laser light, for example, based on the position information of the moving object 200 received from the moving object 200 and a captured image obtained by capturing an image of light from the moving object 200. The captured image may be captured, for example, by an image capture unit which is included in the laser device 100.

The captured image may be, for example, a still image. The captured image may be a moving image.

The laser device 100 may control, for example, an output of the laser light such that more of the laser light is radiated to the photovoltaic panel 250. The laser device 100 may control, for example, the laser light such that a distance between a center of the laser light and a center of the photovoltaic panel 250 becomes shorter. The laser device 100 may control, for example, a radiation direction of the laser light such that the center of the laser light coincides with the center of the photovoltaic panel 250.

The laser device 100 may be installed, for example, on the ground. The laser device 100 may be installed, for example, in a structure such as a tower or a building. The laser device 100 may be installed in a moving object such as a vehicle or a ship. When the laser device 100 is installed in the building or the moving object, the laser device 100 may be mounted on a space stabilization device which spatially stabilizes a control target by actively or passively reducing a detected vibration.

The moving object 200 may move, for example, in the air. The moving object 200 may move, for example, in a stratosphere. The moving object 200 may move, for example, in outer space. The moving object 200 may move, for example, on the ground. The moving object 200 may move, for example, on the sea. The moving object 200 may move underwater.

The moving object 200 may transport, for example, any transportation target. The transportation target of the moving object 200 may be, for example, goods. The transportation target of the moving object 200 may be a person.

The moving object 200 may be, for example, a flying object. The flying object may be, for example, an unmanned aerial vehicle. The flying object may be, for example, a drone. The flying object may be, for example, a HAPS. The flying object may be, for example, a glider. The flying object may be a manned aerial vehicle. The flying object may be, for example, a flying car. The moving object 200 may be, for example, a vehicle. The moving object 200 may be a ship. Fig. 1 mainly describes an example of a case where the moving object 200 is the drone.

The moving object 200 may include one or more photovoltaic panels 250. Fig. 1 shows an example in which the moving object 200 has the photovoltaic panel 250 on a lower part of the moving object 200. The moving object 200 may have the photovoltaic panel 250 on an upper part of the moving object 200. The moving object 200 may have the photovoltaic panel 250 on a side part of the moving object 200. The moving object 200 may have the photovoltaic panel 250 on any other part of the moving object 200.

The photovoltaic panel 250 may be, for example, a solar panel. The solar panel may be, for example, a silicon (Si) solar panel. The solar panel may be, for example, a CIGS solar panel which has high conversion efficiency for converting light energy in an infrared region into electric power. The CIGS solar panel is a solar panel formed by using copper (Cu), indium (In), gallium (Ga), and selenium (Se). The solar panel may be a gallium arsenide (GaAs) solar panel.

The photovoltaic panel 250 may be formed into any shape, for example, by combining one or more solar cells. The shape of the photovoltaic panel 250 may be, for example, a circle. The shape of the photovoltaic panel 250 may be, for example, an ellipse. The shape of the photovoltaic panel 250 may be, for example, a rectangle. The shape of the photovoltaic panel 250 may be, for example, a square.

The photovoltaic panel 250 may be formed by using the solar cells of the same size such that the conversion efficiency of the laser light with a uniform intensity distribution becomes high. In this case, when scintillation occurs in the laser light due to an atmospheric fluctuation or the like, the moving object 200 may use a homogenizer which homogenizes the intensity distribution of the laser light, to reduce an influence of the scintillation on the intensity distribution of the laser light.

The moving object 200 may have a battery (not shown). The battery may store electric power generated by the photovoltaic panel 250. The moving object 200 may move by using the electric power stored in the battery.

The moving object 200 may further have a housing unit (not shown) which houses the transportation target. The moving object 200 may have the housing unit, for example, in an upper part of the moving object 200. The moving object 200 may have the housing unit, for example, between a lower part of the moving object 200 and the photovoltaic panel 250. The moving object 200 may have the housing unit in any other part of the moving object 200.

The moving object 200 may have, for example, a function of acquiring movement-related information that is related to a movement of the moving object 200. The function of acquiring the movement-related information of the moving object 200 includes, for example, a function of acquiring the position information of the moving object 200. The moving object 200 may acquire the position information of the moving object 200, for example, by using a GNSS (Global Navigation Satellite System) function. The moving object 200 may acquire the position information of the moving object 200, for example, by using a GPS (Global Positioning System) function. The moving object 200 may acquire the position information of the moving object 200 by using an RTK (Real Time Kinematic) function.

The function of acquiring the movement-related information of the moving object 200 may include, for example, a function of acquiring movement speed information indicating a movement speed of the moving object 200. The function of acquiring the movement-related information of the moving object 200 may include, for example, a function of acquiring movement direction information indicating a movement direction of the moving object 200. The function of acquiring the movement-related information of the moving object 200 may include a function of acquiring posture information indicating a posture of the moving object 200.

The moving object 200 may have a function of acquiring power generation amount information indicating an amount of power generated by the photovoltaic panel 250. The moving object 200 may have a function of acquiring remaining battery level information indicating a remaining battery level of the battery mounted on the moving object 200.

The moving object 200 may have a function of acquiring environmental information indicating an environment around the moving object 200. A region around the moving object 200 may be a region in a predetermined range from the moving object 200.

The moving object 200 may have, for example, a function of accessing the network 20. The moving object 200 may access the network 20, for example, similarly to the laser device 100.

The moving object 200 may have, for example, a function of wirelessly communicating with the laser device 100. The moving object 200 may transmit, for example, the movement-related information to the laser device 100. The moving object 200 may receive installation position information indicating an installation position of the laser device 100, from the laser device 100.

The moving object 200 may have, for example, a function of controlling the movement of the moving object 200. The function of controlling the movement of the moving object 200 may include, for example, a function of controlling the position of the moving object 200. The function of controlling the movement of the moving object 200 may include, for example, a function of controlling the movement direction of the moving object 200. The function of controlling the movement of the moving object 200 may include a function of controlling the posture of the moving object 200. The moving object 200 may have a function of controlling an angle of the photovoltaic panel 250.

The moving object 200 may generate, for example, a moving object control signal for controlling the moving object 200, and control at least one of the movement of the moving object 200 or the angle of the photovoltaic panel 250 according to the generated moving object control signal. In this case, the moving object 200 may be an autonomous moving object. The moving object 200 may control at least one of the movement of the moving object 200 or the angle of the photovoltaic panel 250 according to the moving object control signal received, via the network 20, from a moving object management device which manages the moving object 200.

For example, the moving object 200 may control at least one of the movement of the moving object 200 or the angle of the photovoltaic panel 250 such that the photovoltaic panel 250 more efficiently receives the laser light from the laser device 100. For example, the moving object 200 may control at least one of the movement of the moving object 200 or the angle of the photovoltaic panel 250, based on the position information of the moving object 200 and the installation position information of the laser device 100 received from the laser device 100. The moving object 200 may control at least one of the movement of the moving object 200 or the angle of the photovoltaic panel 250, further based on the movement speed information of the moving object 200. The moving object 200 may control at least one of the movement of the moving object 200 or the angle of the photovoltaic panel 250, further based on the movement direction information of the moving object 200. The moving object 200 may control at least one of the movement of the moving object 200 or the angle of the photovoltaic panel 250, further based on the posture information of the moving object 200.

The laser device management device 300 may manage one or more laser devices 100. For example, the laser device management device 300 may manage one laser device 100 such that the one laser device 100 wirelessly feeds the power to one moving object 200. For example, when the laser device 100 has a function of outputting a plurality of beams of laser light, the laser device management device 300 may manage one laser device 100 such that the one laser device 100 wirelessly feeds the power to a plurality of moving objects 200. For example, the laser device management device 300 may manage a plurality of laser devices 100 such that the plurality of laser devices 100 wirelessly feed the power to one moving object 200. The laser device management device 300 may manage the plurality of laser devices 100 such that the plurality of laser devices 100 wirelessly feed the power to the plurality of moving object 200.

The laser device management device 300 may manage, for example, the wireless power feeding by the laser device 100. For example, the laser device management device 300 may generate the laser light control signal, based on the movement-related information of the moving object 200 received from the laser device 100 via the network 20, and the captured image obtained by capturing the light from the moving object 200. The laser device management device 300 may transmit the generated laser light control signal to the laser device 100 via the network 20. The laser device 100 may wirelessly feed the power according to the laser light control signal received from the laser device management device 300.

The laser device management device 300 may be installed, for example, on the ground. The laser device management device 300 may be installed, for example, in a building. The laser device management device 300 may be installed in the moving object.

The laser device management device 300 may be installed, for example, at the same location as that of the laser device 100. The laser device management device 300 may be installed at a location different from that of the laser device 100.

Currently, when the moving object such as the flying object moves only by the electric power generated from the sunlight by the photovoltaic panel mounted on the moving object, a time during which the moving object is able to continuously move, is limited, in a case where the sunlight that is radiated to the photovoltaic panel is insufficient, such as a case of moving at night; a case of moving in the winter; a case of moving through an area of bad weather; and a case of moving in an area of high latitude. Accordingly, it is desirable to be able to extend the time during which the moving object is able to continuously move even in the case where the sunlight that is radiated to the photovoltaic panel is insufficient.

With the system 10 according to an embodiment, the laser device 100 controls the laser light such that the laser light is radiated to the photovoltaic panel 250 mounted on the moving object 200, based on the position information of the moving object 200 and the captured image obtained by capturing the light from the moving object 200. The laser device 100 can accurately grasp the position, the size, and the shape of the photovoltaic panel 250, from the position information of the moving object 200 and the captured image, and thus it is possible to radiate more of the laser light to the photovoltaic panel 250. In this manner, in the system 10 according to an embodiment, it is possible for the laser device 100 to wirelessly feed the power to the moving object 200 which is moving, with high efficiency, and it is possible to extend the time during which the moving object 200 is able to continuously move even in the case where the sunlight that is radiated to the photovoltaic panel 250 is insufficient.

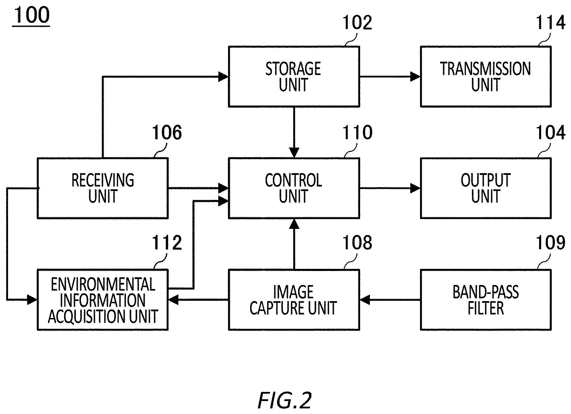

Fig. 2 schematically shows an example of a functional configuration of the laser device 100. The laser device 100 may have a storage unit 102, an output unit 104, a receiving unit 106, an image capture unit 108, a band-pass filter 109, a control unit 110, an environmental information acquisition unit 112, and a transmission unit 114. It should be noted that it is not essential that the laser device 100 have all of these configurations.

The storage unit 102 may store various types of information. The storage unit 102 may store, for example, the installation position information of the laser device 100. The storage unit 102 may store moving object performance information indicating a performance of the moving object 200.

The moving object performance information may include, for example, information of the number of power generation panels indicating the number of the photovoltaic panels 250 mounted on the moving object 200. The moving object performance information may include power generation performance information indicating a power generation performance of the photovoltaic panel 250 mounted on the moving object 200. The moving object performance information may include, for example, panel shape information indicating the shape of the photovoltaic panel 250 mounted on the moving object 200. The moving object performance information may include, for example, size information indicating the size of the photovoltaic panel 250 mounted on the moving object 200. The moving object performance information may include, for example, maximum capacity information indicating a maximum capacity of the battery mounted on the moving object 200. The moving object performance information may include, for example, maximum movement speed information indicating a maximum movement speed of the moving object 200. The moving object performance information may include, for example, moving object weight information indicating a weight of the moving object 200. The moving object performance information may include maximum transportation weight information indicating a maximum weight of a transportation target that is able to be transported by the moving object 200.

The output unit 104 may output the laser light. The laser device 100 may have a plurality of output units 104.

The output unit 104 may be, for example, a solid-state laser. The solid-state laser may be, for example, a fiber laser that uses an optical fiber for an amplification medium. The output unit 104 may be, for example, a semiconductor laser. The output unit 104 may be, for example, a gas laser. The output unit 104 may be a liquid laser.

The output unit 104 may output, for example, the laser light with a wavelength in the infrared region. For example, when the moving object 200 which is a power feeding target of the laser device 100 is a HAPS, in order to prevent the laser light from being attenuated by the atmosphere, the output unit 104 may output the laser light in a wavelength band of a so-called "atmospheric window" that is a wavelength region in which transmittance of the light in the atmosphere is high. The output unit 104 may output, for example, the laser light with a wavelength of 1070 nm ± 100 nm. The output unit 104 may output, for example, the laser light with a wavelength of 1070 nm. The output unit 104 may output, for example, the laser light with a wavelength in a visible region.

The output unit 104 may have one or more optical elements by which an optical system for the laser light is configured. The optical element may be, for example, a homogenizer that converts the laser light of a Gaussian beam into the laser light of a top-hat beam. The optical element may be, for example, a beam shaper. The optical element may be, for example, a diffraction grating. It should be noted that the optical element is not limited to the example described above. The optical element may be used as long as the optical system of the laser light is able to be configured, for which the configuration may be made, for example, by a known optical technique in the related art of a mirror including a deformable mirror, a prism, a transmission type element, a reflection type element, or the like.

The receiving unit 106 may receive various types of information from an external device. The receiving unit 106 may store the various types of information received from the external device, in the storage unit 102.

The receiving unit 106 may receive, for example, various types of information from the moving object 200. The receiving unit 106 may receive, for example, the various types of information from the moving object 200 via the wireless communication between the laser device 100 and the moving object 200. The receiving unit 106 may receive the various types of information from the moving object 200 via the network 20.

The receiving unit 106 may receive, for example, the movement-related information of the moving object 200 from the moving object 200. The movement-related information of the moving object 200 may include, for example, the position information of the moving object 200. The movement-related information of the moving object 200 may include the movement speed information of the moving object 200. The movement-related information of the moving object 200 may include, for example, the movement direction information of the moving object 200. The movement-related information of the moving object 200 may include the posture information of the moving object 200.

For example, the receiving unit 106 may receive, from the moving object 200, the power generation amount information of the photovoltaic panel 250 mounted on the moving object 200. For example, the receiving unit 106 may receive, from the moving object 200, the remaining battery level information of the battery mounted on the moving object 200. For example, the receiving unit 106 may receive, from the moving object 200, requested power feeding amount information indicating an amount of power feeding for which the moving object 200 requests the laser device 100. For example, the receiving unit 106 may receive, from the moving object 200, the moving object performance information of the moving object 200. For example, the receiving unit 106 may receive, from the moving object 200, transportation target weight information indicating a total weight of the transportation target that is transported by the moving object 200.

The receiving unit 106 may receive the environmental information around the moving object 200 from the moving object 200. The environmental information around the moving object 200 may include, for example, weather information indicating weather around the moving object 200. The weather information around the moving object 200 may include, for example, radiant intensity information indicating radiant intensity of the sunlight around the moving object 200. The weather information around the moving object 200 may include, for example, cloud cover information indicating a cloud cover around the moving object 200. The weather information around the moving object 200 may include, for example, rainfall amount information indicating an amount of rainfall around the moving object 200. The weather information around the moving object 200 may include, for example, snowfall amount information indicating an amount of snowfall around the moving object 200. The weather information around the moving object 200 may include, for example, wind speed information indicating a wind speed around the moving object 200. The weather information around the moving object 200 may include, for example, wind direction information indicating a wind direction around the moving object 200. The weather information around the moving object 200 may include, for example, temperature information indicating a temperature around the moving object 200. The weather information around the moving object 200 may include, for example, humidity information indicating humidity around the moving object 200. The weather information around the moving object 200 may include atmospheric pressure information indicating an atmospheric pressure around the moving object 200.

The environmental information around the moving object 200 may include object information indicating an object that exists around the moving object 200. The object that exists around the moving object 200 may be, for example, a moving object such as a flying object, an artificial satellite, a vehicle, and a ship. The object that exists around the moving object 200 may be, for example, an animal such as a bird. The object that exists around the moving object 200 may be a human being.

The object information of the object that exists around the moving object 200 may include, for example, information indicating the position of the object that exists around the moving object 200. The object information of the object that exists around the moving object 200 may include, for example, information indicating the size of the object that exists around the moving object 200. The object information of the object that exists around the moving object 200 may include information indicating a type of the object that exists around the moving object 200.

The receiving unit 106 may receive, for example, various types of information from the moving object management device of the moving object 200 via the network 20. For example, the receiving unit 106 may receive, from the moving object management device, information similar to the information received from the moving object 200.

The receiving unit 106 may receive the environmental information around the moving object 200 from an environmental information management device which manages the environmental information, via the network 20. The receiving unit 106 may receive operation plan information indicating an operation plan of the moving object, from an operation plan management device which manages an operation plan for the moving object such as a flying object, an artificial satellite, a vehicle, and a ship, via the network 20.

The image capture unit 108 may capture the image of the light from the moving object 200. The image capture unit 108 may, for example, capture an image of the light emitted by a light source installed at a position corresponding to the photovoltaic panel 250 mounted on the moving object 200. The image capture unit 108 may, for example, capture the image of the light emitted by a plurality of light sources installed at positions corresponding to the photovoltaic panel 250. It should be noted that a corner mirror may be further installed at the position corresponding to the photovoltaic panel 250.

The light source may be, for example, an LED (Light Emitting Diode) lamp. The light source may be any other light source.

The position corresponding to the photovoltaic panel 250 may be, for example, the center of the photovoltaic panel 250. The position corresponding to the photovoltaic panel 250 may be around the photovoltaic panel 250.

The image capture unit 108 may capture an image of the light obtained by a reflection plate installed around the photovoltaic panel 250, reflecting the laser light by the output unit 104. The reflection plate may be installed around the photovoltaic panel 250 to protect the moving object 200 from heat due to the laser light by the output unit 104 being radiated to an airframe of the moving object 200.

The image capture unit 108 may, for example, zoom in and capture an image of the moving object 200. The image capture unit 108 may, for example, zoom in and capture an image of the photovoltaic panel 250. The image capture unit 108 may use, for example, a telephoto lens to zoom in and capture the image of moving object 200 or the photovoltaic panel 250.

The image capture unit 108 may be, for example, an optical camera. The image capture unit 108 may be, for example, a visible light camera. The image capture unit 108 may be an infrared camera. In this case, the image capture unit 108 may capture the image of infrared light due to a rise in the temperature of an irradiated portion to which the laser light by the output unit 104 is radiated. The irradiated portion may be, for example, the photovoltaic panel 250. The irradiated portion may be, for example, the corner mirror. The irradiated portion may be the reflection plate.

The band-pass filter 109 may pass only a wavelength band in a predetermined range. The band-pass filter 109 may pass, for example, only a wavelength band in a predetermined range including the wavelength of the laser light output by the output unit 104. The image capture unit 108 may capture the image of the light that has passed through the band-pass filter 109. The captured image obtained by capturing only the light that has passed through the band-pass filter 109 makes it easy to find the moving object 200 to which the laser light that passes through the band-pass filter 109 is radiated. The band-pass filter 109 may further pass the light emitted by the light source installed at the position corresponding to the photovoltaic panel 250.

The control unit 110 may control the laser light that is output by the output unit 104. The control unit 110 may control, for example, the laser light by controlling the output unit 104. The control unit 110 may control the laser light, for example, by controlling one or more optical elements included in the output unit 104. The control unit 110 may control, for example, the output of the laser light such that more of the laser light is radiated to the photovoltaic panel 250.

For example, the control unit 110 may generate the laser light control signal, to control the laser light according to the generated laser light control signal. The control unit 110 may control the laser light according to the laser light control signal that is received by the receiving unit 106 from the laser device management device 300 via the network 20.

The laser light control signal may include, for example, a radiation direction control signal for controlling the radiation direction of the laser light. The laser light control signal may include, for example, a shape control signal for controlling the shape of the laser light. The laser light control signal may include, for example, an intensity distribution control signal for controlling the intensity distribution of the laser light. The laser light control signal may include, for example, a beam diameter control signal for controlling a beam diameter of the laser light. The laser light control signal may include a wave front control signal for controlling a wave front of the laser light. The laser light control signal may include, for example, an output power control signal for controlling output power of the laser light. The laser light control signal may include a timing control signal for controlling a timing of outputting the laser light.

For example, the control unit 110 may control the laser light, based on the position of the moving object 200 indicated by the position information of the moving object 200 included in the movement-related information of the moving object 200 received by the receiving unit 106; and the captured image that is captured by the image capture unit 108. For example, the control unit 110 may analyze the image of the captured image in which an image of a region including the position of the moving object 200 is captured by the image capture unit 108, thereby controlling the laser light such that the laser light is radiated to the photovoltaic panel 250 mounted on the moving object 200. For example, before the output unit 104 is caused to output the laser light, the control unit 110 may transmit, to the moving object 200, an instruction to start light emission of the light source installed at the position corresponding to the photovoltaic panel 250, and cause the moving object 200 to start the light emission of the light source. Next, the control unit 110 may analyze the image of the captured image in which the image of the region including the position of the moving object 200 is captured by the image capture unit 108, and specify the position of the light source, thereby specifying the position of the photovoltaic panel 250. After that, the control unit 110 may cause the output unit 104 to output the laser light such that the laser light is radiated to the photovoltaic panel 250 of which the position is specified. After the output unit 104 starts outputting the laser light, the control unit 110 may specify the position of the photovoltaic panel 250, from reflected light obtained by the corner mirror or the reflection plate reflecting the laser light. After the output unit 104 starts outputting the laser light, the control unit 110 may transmit, to the moving object 200, an instruction to end the light emission of the light source, and cause the moving object 200 to end the light emission of the light source. The control unit 110 may control the laser light, for example, further based on the installation position of the laser device 100 indicated by the installation position information of the laser device 100 stored in the storage unit 102.

The control unit 110 may control, for example, the radiation direction of the laser light. The control unit 110 may control, for example, the radiation direction of the laser light such that the distance between the center of the laser light and the center of the photovoltaic panel 250 becomes shorter. The control unit 110 may control, for example, the radiation direction of the laser light such that the center of the laser light coincides with the center of the photovoltaic panel 250. For example, the control unit 110 may control the radiation direction of the laser light, by analyzing the image of the captured image in which the image of the photovoltaic panel 250 is captured by the image capture unit 108, and specifying a position of the center of the photovoltaic panel 250.

The control unit 110 may control the radiation direction of the laser light, for example, by using a gimbal. The control unit 110 may control the radiation direction of the laser light by controlling the optical element such as the mirror and the prism included in the output unit 104.

The control unit 110 may control, for example, the shape of the laser light. The control unit 110 may control, for example, the shape of the laser light to be a circle. The control unit 110 may control, for example, the shape of the laser light to be an ellipse. The control unit 110 may be able to control, for example, an aspect ratio and an orientation of the ellipse. The control unit 110 may control, for example, the shape of the laser light to be a rectangle. The control unit 110 may be able to control, for example, the aspect ratio and the orientation of the rectangle. The control unit 110 may control, for example, the shape of the laser light to be a square. The control unit 110 may be able to control, for example, the orientation of the square.

For example, the control unit 110 may control the shape of the laser light such that a shape error between the shape of the laser light and the shape of the photovoltaic panel 250 becomes smaller. The control unit 110 may control, for example, the shape of the laser light such that the shape of the laser light matches the shape of the photovoltaic panel 250.

The control unit 110 may control, for example, the intensity distribution of the laser light. The control unit 110 may control, for example, the intensity distribution of the laser light such that the intensity distribution of the laser light becomes more uniform on the photovoltaic panel 250.

The control unit 110 may control, for example, the beam diameter of the laser light. The control unit 110 may control the beam diameter of the laser light such that a ratio of the size of the laser light to the size of the photovoltaic panel 250 becomes a predetermined ratio. The predetermined ratio may be, for example, 1.1.

For example, the control unit 110 may analyze the image of the captured image in which the image of the photovoltaic panel 250 is captured by the image capture unit 108, thereby specifying at least one of the shape of the photovoltaic panel 250, the size of the photovoltaic panel 250, or the ratio of the size of the laser light to the size of the photovoltaic panel 250. The control unit 110 may specify at least one of the shape of the photovoltaic panel 250, the size of the photovoltaic panel 250, or the ratio of the size of the laser light to the size of the photovoltaic panel 250, further based on the moving object performance information of the moving object 200 stored in the storage unit 102, and the installation position information of the laser device 100, and the position information of the moving object 200 received by the receiving unit 106.

The control unit 110 may control the output unit 104 such that the electric power generated by the photovoltaic panel 250 which has received the laser light, is maximized. For example, the control unit 110 may control one or more optical elements included in the output unit 104 such that the electric power generated by the photovoltaic panel 250 which has received the laser light, is maximized. Specifically, the control unit 110 may control, for example, the optical element such as a beam shaper, thereby controlling at least one of the shape, the intensity distribution, or the beam diameter of the laser light such that the electric power generated by the photovoltaic panel 250 which has received the laser light, is maximized.

The control unit 110 may control, for example, the wave front of the laser light. The control unit 110 may control the wave front of the laser light, for example, by controlling the optical element such as the deformable mirror included in the output unit 104. For example, in order to reduce the influence of the scintillation that occurs in the laser light at a random time and position due to the atmospheric fluctuation or the like in a propagation path of the laser light, the control unit 110 may control the wave front of the laser light, by controlling the optical element such as the deformable mirror included in the output unit 104. The control unit 110 may control the wave front of the laser light, for example, based on the amount of power generated by the photovoltaic panel 250, which is indicated by the power generation amount information received by the receiving unit 106.

The control unit 110 may control, for example, the output power of the laser light. The control unit 110 may control the output power of the laser light, for example, based on the amount of power feeding for which the moving object 200 requests the laser device 100, and which is indicated by the requested power feeding amount information of the moving object 200 received by the receiving unit 106. The control unit 110 may control the output power of the laser light, for example, based on the remaining battery level of the battery mounted on the moving object 200, which is indicated by the remaining battery level information of the moving object 200 received by the receiving unit 106. The control unit 110 may control the output power of the laser light, based on the moving object performance information stored in the storage unit 102.

The control unit 110 may control the laser light such that the laser light which is output by the output unit 104 tracks the photovoltaic panel 250, further based on the movement speed of the moving object 200 indicated by the movement speed information of the moving object 200 included in the movement-related information of the moving object 200 received by the receiving unit 106; and the movement direction of the moving object 200 indicated by the movement direction information of the moving object 200. The control unit 110 may control, for example, the laser light such that the center of the laser light tracks the center of the photovoltaic panel 250. The control unit 110 may control the laser light such that the laser light tracks the photovoltaic panel 250, based on a prediction result obtained by predicting the position of the moving object 200 after a predetermined period elapses, from the position of the moving object 200, the movement speed of the moving object 200, and the movement direction of the moving object 200.

For example, the control unit 110 may determine a target ratio of the size of the laser light to the size of the photovoltaic panel 250, based on a track result obtained by the laser light tracking the photovoltaic panel 250; and control the beam diameter of the laser light such that the ratio of the size of the laser light to the size of the photovoltaic panel 250 becomes the determined target ratio. The control unit 110 may determine, for example, the target ratio such that the size of the laser light covers the entire photovoltaic panel 250. The control unit 110 may determine, for example, the target ratio such that the size of the laser light covers the entire photovoltaic panel 250 and the size of the laser light becomes smaller. The control unit 110 may determine, for example, the size of the laser light relative to the size of the photovoltaic panel 250 in a range in which the size of the laser light is greater than the size of the photovoltaic panel 250.

For example, the control unit 110 may determine the distance between the center of the laser light and the center of the photovoltaic panel 250, based on the track result obtained by the laser light tracking the photovoltaic panel 250; and determine the target ratio of the size of the laser light to the size of the photovoltaic panel 250, according to the determined distance. For example, during a predetermined period, in a case where the distance between the center of the laser light and the center of the photovoltaic panel 250 is shorter than a predetermined distance threshold value, the control unit 110 may determine to set the target ratio of the size of the laser light to the size of the photovoltaic panel 250, to be small. The control unit 110 may determine to set, for example, the target ratio of the size of the laser light to the size of the photovoltaic panel 250, to be as small as 1.05 from 1.1. For example, during the predetermined period, in a case where the distance between the center of the laser light and the center of the photovoltaic panel 250 is longer than the predetermined distance threshold value, the control unit 110 may determine to set the target ratio of the size of the laser light to the size of the photovoltaic panel 250, to be great. The control unit 110 may determine to set, for example, the target ratio of the size of the laser light to the size of the photovoltaic panel 250, to be as great as 1.2 from 1.1.

The environmental information acquisition unit 112 may acquire the environmental information around the moving object 200. The environmental information acquisition unit 112 may acquire, for example, the environmental information around the moving object 200 received by the receiving unit 106. The environmental information acquisition unit 112 may acquire the environmental information around the moving object 200, for example, by analyzing the image of the captured image that is captured by the image capture unit 108. The environmental information acquisition unit 112 may use, for example, RADAR (Radio Detection And Ranging) to acquire the environmental information around the moving object 200. The environmental information acquisition unit 112 may use LiDAR (Light Detection And Ranging) to acquire the environmental information around the moving object 200.

The control unit 110 may control the laser light, for example, further based on the environmental information around the moving object 200 acquired by the environmental information acquisition unit 112. The control unit 110 may control the output power of the laser light, for example, based on the radiant intensity of the sunlight around the moving object 200 indicated by the radiant intensity information included in the environmental information around the moving object 200. The control unit 110 may control, for example, the output power of the laser light such that the smaller the radiant intensity of the sunlight around the moving object 200 is, the stronger the output power of the laser light is.

The control unit 110 may control, for example, the timing of outputting the laser light such that the laser light is not radiated to the object which exists around the moving object 200, and which is indicated by the object information included in the environmental information around the moving object 200. The control unit 110 may control, for example, the timing of outputting the laser light such that the laser light is not radiated to the object which exists around a path of the laser light. A region around the path of the laser light may be a region in a predetermined range from the path of the laser light. The control unit 110 may control, for example, the timing of outputting the laser light such that the laser light is not radiated to the object which exists in front of the moving object 200. The control unit 110 may control, for example, the timing of outputting the laser light such that the laser light is not radiated to the object which exists between the laser device 100 and the moving object 200. Controlling the timing of outputting the laser light includes stopping the radiation of the laser light during a predetermined period. Further, when the object exists behind the moving object 200, the control unit 110 may control the beam diameter of the laser light such that the size of the laser light becomes smaller than the size of the photovoltaic panel 250 by a predetermined ratio. The control unit 110 may control, for example, the beam diameter of the laser light such that the ratio of the size of the laser light to the size of the photovoltaic panel 250 becomes 0.85. This makes it possible to reduce a possibility of an unexpected accident occurring due to the radiation of the laser light to the moving object 200. It should be noted that a region in front of the moving object 200 is a region in a direction toward the laser device 100 which radiates the laser light to the moving object 200, when viewed from the position of the moving object 200; and a region behind the moving object 200 is a region in an opposite direction of the direction toward the laser device 100 which radiates the laser light to the moving object 200, when viewed from the position of the moving object 200.

The control unit 110 may control the laser light, for example, further based on the operation plan information received by the receiving unit 106. The control unit 110 may control, for example, the timing of outputting the laser light such that the laser light is not radiated to another moving object which moves around the moving object 200 according to the operation plan indicated by the operation plan information. The control unit 110 may control, for example, the timing of outputting the laser light such that the laser light is not radiated to another moving object which moves around the path of the laser light according to the operation plan. The control unit 110 may control, for example, the timing of outputting the laser light such that the laser light is not radiated to another moving object which moves in front of the moving object 200 according to the operation plan. The control unit 110 may control, for example, the timing of outputting the laser light such that the laser light is not radiated to another moving object which exists between the laser device 100 and the moving object 200 according to the operation plan. When another moving object which moves according to the operation plan, exists behind the moving object 200, the control unit 110 may control the beam diameter of the laser light such that the size of the laser light becomes smaller than the size of the photovoltaic panel 250 by a predetermined ratio.

The transmission unit 114 may transmit various types of information to an external device. The transmission unit 114 may transmit, for example, various types of information to the moving object 200. For example, the transmission unit 114 may transmit the various types of information to the moving object 200 via the wireless communication between the laser device 100 and the moving object 200. The transmission unit 114 may transmit the various types of information to the moving object 200 via the network 20. The transmission unit 114 may transmit, for example, the installation position information of the laser device 100 to the moving object 200.

The transmission unit 114 may transmit, for example, various types of information to the laser device management device 300 via the network 20. The transmission unit 114 may transmit, for example, the various types of information received by the receiving unit 106, to the laser device management device 300. For example, the transmission unit 114 may transmit, to the laser device management device 300, the track result obtained by the laser light tracking the photovoltaic panel 250. The transmission unit 114 may transmit, to the laser device management device 300, the environmental information around the moving object 200 acquired by the environmental information acquisition unit 112.

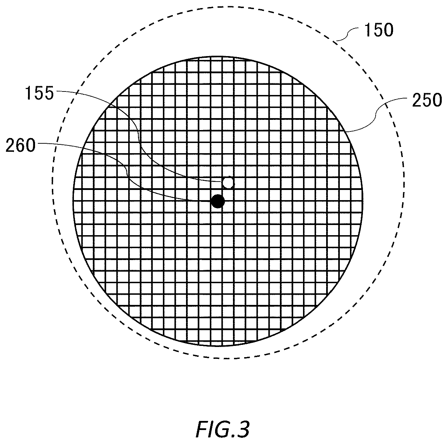

Fig. 3 schematically shows an example of the photovoltaic panel 250. A light source 260 is installed at the center of the photovoltaic panel 250 in Fig. 3. Fig. 3 shows a state in which the laser light 150 with a center 155 is radiated to the photovoltaic panel 250.

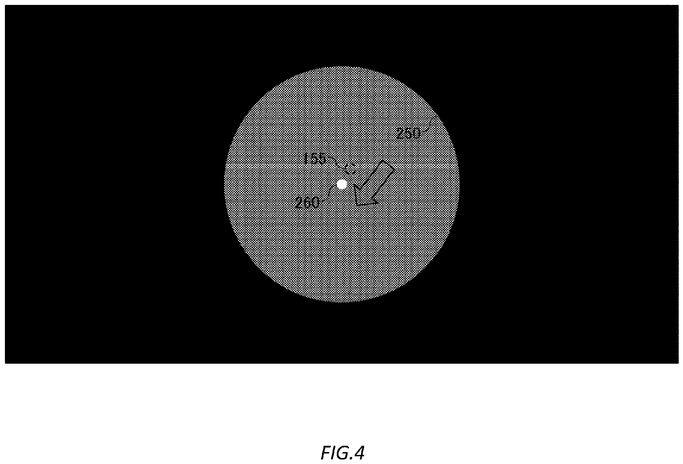

Fig. 4 schematically shows an example of a captured image. The captured image in Fig. 4 is the captured image obtained by capturing the photovoltaic panel 250 in the state shown in Fig. 3. The captured image in Fig. 4 may be, for example, a captured image including the reflected light obtained by reflecting a part of the laser light 150 which has passed through the band-pass filter 109 and which is received by the photovoltaic panel 250; and the light that is emitted by the light source 260. Luminance of the captured image in Fig. 4 becomes high in the following order: luminance of a light emission region of the light emitted by the light source 260; luminance of a reflected light region of the reflected light obtained by the photovoltaic panel 250 reflecting the laser light 150; and luminance of other regions.

The control unit 110 may specify the position of the center of the photovoltaic panel 250, by analyzing the image of the captured image of Fig. 4 and specifying the position of the light emission region of the light emitted by the light source 260. The control unit 110 may control the radiation direction of the laser light 150 such that the distance between the center 155 of the laser light 150 and the specified center of the photovoltaic panel 250 becomes shorter.

With the examples shown in Fig. 3 and Fig. 4, the laser device 100 controls the radiation direction of the laser light 150 such that: a role as a marker for the position of the center of the photovoltaic panel 250, is fulfilled; the position of the light emitted by the light source 260 installed at the position of the center of the photovoltaic panel 250, is specified; and the distance between the center 155 of the laser light 150 and the specified center of the photovoltaic panel 250 becomes shorter. This makes it possible for the laser device 100 to make a loss of the laser light 150 smaller, the loss occurring due to the laser light 150 not being radiated to the photovoltaic panel 250.

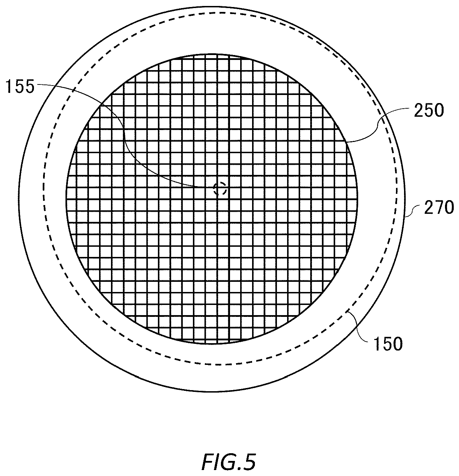

Fig. 5 schematically shows another example of the photovoltaic panel 250. A reflection plate 270 is installed around the photovoltaic panel 250 in Fig. 5. Fig. 5 shows a state in which the laser light 150 with the center 155 is radiated to the photovoltaic panel 250 and the reflection plate 270.

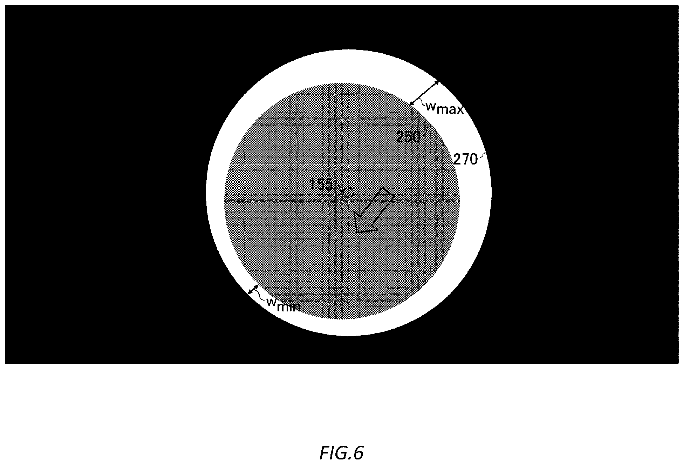

Fig. 6 schematically shows another example of the captured image. The captured image in Fig. 6 is the captured image obtained by capturing the photovoltaic panel 250 in the state shown in Fig. 5. The captured image in Fig. 6 may be, for example, the captured image including the reflected light obtained by reflecting a part of the laser light 150 which has passed through the band-pass filter 109 and which is received by the photovoltaic panel 250; and the reflected light obtained by the reflection plate 270 reflecting the laser light 150. Luminance of the captured image in Fig. 6 becomes high in the following order: luminance of a reflected light region of the reflected light obtained by the reflection plate 270 reflecting the laser light 150; luminance of a reflected light region of the reflected light obtained by the photovoltaic panel 250 reflecting the laser light 150; and luminance of other regions.

The control unit 110 may control the radiation direction of the laser light 150 such that the distance between the center 155 of the laser light 150 and the center of the photovoltaic panel 250 becomes shorter. The control unit 110 may control, for example, the radiation direction of the laser light 150, based on the reflected light region of the reflected light obtained by the reflection plate 270 reflecting the laser light 150, the reflected light region being specified by analyzing the image of the captured image in Fig. 6. The control unit 110 may control, for example, the radiation direction of the laser light 150 such that a width of the reflected light region becomes more uniform. The control unit 110 may specify, for example, each of a maximum width wₘₐₓ in which a width is the greatest and a minimum width wₘᵢₙ in which the width is smallest, in the reflected light region, and control the radiation direction of the laser light 150 such that
wₘᵢₙ becomes as great as (wₘₐₓ - wₘᵢₙ) ÷ 2.

With the examples shown in Fig. 5 and Fig. 6, the laser device 100 controls the radiation direction of the laser light 150 such that a role as a marker for determining the radiation direction of the laser light 150, is fulfilled, and the distance between the center 155 of the laser light 150 and the center of the photovoltaic panel 250 becomes shorter, based on the reflected light obtained by the reflection plate 270 reflecting the laser light 150. This makes it possible for the laser device 100 to make a loss of the laser light 150 smaller, the loss occurring due to the laser light 150 not being radiated to the photovoltaic panel 250.

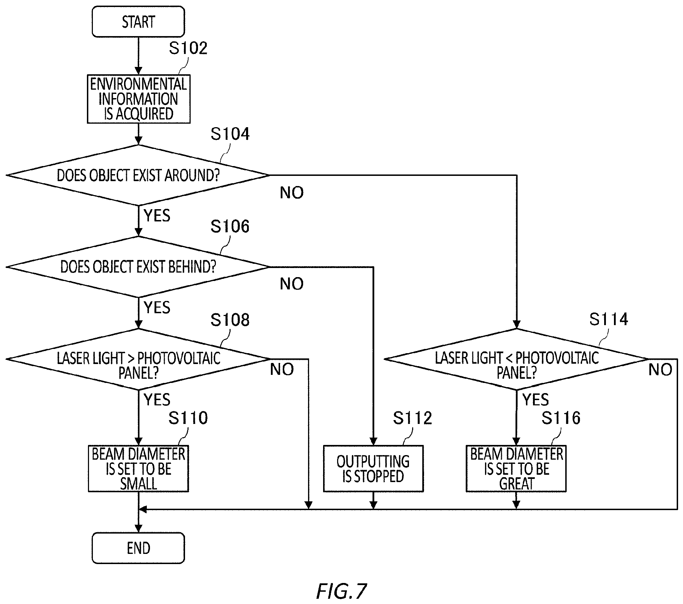

Fig. 7 is an illustration for describing an example of a processing flow of the laser device 100. Fig. 7 describes, as a start state, a state in which the laser device 100 radiates the laser light 150 to the moving object 200.

In step (the step may be abbreviated as S) 102, the environmental information acquisition unit 112 may acquire the environmental information around the moving object 200. In S104, the control unit 110 may determine whether an object exists around the moving object 200, based on the environmental information around the moving object 200 acquired by the environmental information acquisition unit 112 in S102. If the control unit 110 determines that the object exists around the moving object 200, processing may proceed to S106. If the control unit 110 determines that no object exists around the moving object 200, the processing may proceed to S114.

In S106, the control unit 110 may determine whether the object exists behind the moving object 200, based on the environmental information around the moving object 200 acquired by the environmental information acquisition unit 112 in S102. If the control unit 110 determines that the object exists behind the moving object 200, the processing may proceed to S108. If the control unit 110 determines that the object exists other than behind the moving object 200, the processing may proceed to S112.

In S108, the control unit 110 may determine whether the size of the laser light 150 is greater than the size of the photovoltaic panel 250. If the control unit 110 determines that the size of the laser light 150 is greater than the size of the photovoltaic panel 250, the processing may proceed to S110. If the control unit 110 determines that the size of the laser light 150 is smaller than the size of the photovoltaic panel 250, the processing of controlling the laser light 150 based on the environmental information, may end.

In S110, the control unit 110 may control the beam diameter of the laser light such that the size of the laser light 150 becomes smaller than the size of the photovoltaic panel 250 by a predetermined ratio. After that, the processing of controlling the laser light 150 based on the environmental information, may end.

In S112, the control unit 110 may stop outputting the laser light 150 such that the laser light 150 is not radiated to the object which exists around the moving object 200. After that, the processing of controlling the laser light 150 based on the environmental information, may end.

In S114, the control unit 110 may determine whether the size of the laser light 150 is smaller than the size of the photovoltaic panel 250. If the control unit 110 determines that the size of the laser light 150 is smaller than the size of the photovoltaic panel 250, the processing may proceed to S116. If the control unit 110 determines that the size of the laser light 150 is greater than the size of the photovoltaic panel 250, the processing of controlling the laser light 150 based on the environmental information, may end.

In S116, the control unit 110 may control the beam diameter of the laser light such that the size of the laser light 150 becomes greater than the size of the photovoltaic panel 250 by a predetermined ratio. After that, the processing of controlling the laser light 150 based on the environmental information, may end.

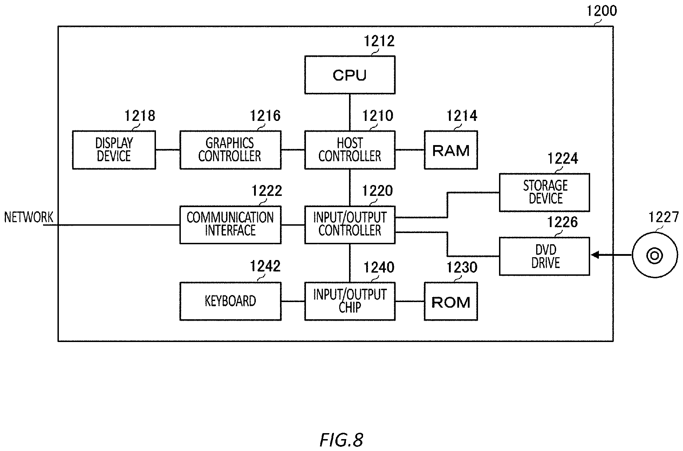

Fig. 8 schematically shows an example of a hardware configuration of a computer 1200 which functions as the laser device 100. Programs installed in the computer 1200 can cause the computer 1200 to function as one or more "units" of the device according to the present embodiment or can cause the computer 1200 to execute operations associated with the devices according to the present embodiment or the one or more "units", and/or can cause the computer 1200 to execute a process according to the present embodiment or steps of the process. Such a program may be executed by a CPU 1212 to cause the computer 1200 to perform particular operations associated with some or all of the blocks in the flowcharts and block diagrams described in the present specification.

The computer 1200 according to an embodiment may include the CPU 1212, a RAM 1214, and a graphics controller 1216, which are interconnected by a host controller 1210. The computer 1200 may also include a communication interface 1222, a storage device 1224, a DVD drive 1226, and an input/output unit such as an IC card drive, which are connected to the host controller 1210 via an input/output controller 1220. The DVD drive 1226 may be a DVD-ROM drive, a DVD-RAM drive, and the like. The storage device 1224 may be a hard disk drive, a solid-state drive, and the like. The computer 1200 may also include a ROM 1230, and a legacy input/output unit such as a keyboard 1242, which are connected to the input/output controller 1220 via an input/output chip 1240.

The CPU 1212 may operate according to programs stored in the ROM 1230 and the RAM 1214, thereby controlling each unit. The graphics controller 1216 may acquire image data which is generated, by the CPU 1212, in a frame buffer or the like provided in the RAM 1214 or in itself, so as to cause the image data to be displayed on a display device 1218.

The communication interface 1222 may communicate with other electronic devices via a network. The storage device 1224 may store programs and data used by the CPU 1212 in the computer 1200. The DVD drive 1226 may read the programs or the data from a DVD-ROM 1227 or the like and provide them to the storage device 1224. The IC card drive may read the programs and the data from the IC card, and/or writes the programs and the data into the IC card.

The ROM 1230 may store, in itself, a boot program or the like that is executed by the computer 1200 during activation, and/or a program that depends on hardware of the computer 1200. The input/output chip 1240 may also connect various input/output units via a USB port, a parallel port, a serial port, a keyboard port, a mouse port, or the like, to the input/output controller 1220.

The program may be provided by a computer-readable storage medium such as the DVD-ROM 1227 or an IC card. The program may be read from the computer-readable storage medium, installed in the storage device 1224, the RAM 1214, or the ROM 1230, which is also an example of the computer-readable storage medium, and executed by the CPU 1212. The information processing written in these programs may be read by the computer 1200 and provide cooperation between the programs and the above-described various types of hardware resources. An apparatus or a method may be constituted by realizing the operation or processing of information in accordance with the usage of the computer 1200.

For example, in a case where a communication is performed between the computer 1200 and an external device, the CPU 1212 may execute a communication program loaded in the RAM 1214 and instruct the communication interface 1222 to perform communication processing based on a process written in the communication program. Under the control of the CPU 1212, the communication interface 1222 may read transmission data stored in a transmission buffer region provided in a recording medium such as the RAM 1214, the storage device 1224, the DVD-ROM 1227, or the IC card, transmit the read transmission data to the network, or writes received data which is received from the network to a receiving buffer region or the like provided on the recording medium.

In addition, the CPU 1212 may be configured to cause all or a necessary portion of a file or a database, which has been stored in an external recording medium such as the storage device 1224, the DVD drive 1226 (the DVD-ROM 1227), the IC card and the like, to be read into the RAM 1214, thereby executing various types of processing on the data on the RAM 1214. Then, the CPU 1212 may write the processed data back in the external recording medium.

Various types of information, such as various types of programs, data, tables, and databases, may be stored in the recording medium to undergo information processing. The CPU 1212 may execute various types of processing on the data read from the RAM 1214 to write back a result to the RAM 1214, the processing being described throughout the present disclosure, specified by instruction sequences of the programs, and including various types of operations, information processing, condition determinations, conditional branching, unconditional branching, information retrievals/replacements, or the like. In addition, the CPU 1212 may retrieve information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the plurality of entries, and read the attribute value of the second attribute stored in the entry, thereby obtaining the attribute value of the second attribute associated with the first attribute satisfying a predetermined condition.

The program or software module described above may be stored on the computer 1200 or in a computer-readable storage medium near the computer 1200. In addition, a recording medium such a hard disk or a RAM provided in a server system connected to a dedicated communication network or the Internet can be used as a computer-readable storage medium, whereby the program may be provided to the computer 1200 via the network.

Blocks in the flowcharts and the block diagrams of an embodiment may represent steps of processes in which operations are performed or "units" of devices responsible for performing operations. A specific step and "unit" may be implemented by dedicated circuitry, programmable circuitry supplied along with a computer-readable instruction stored on a computer-readable storage medium, and/or a processor supplied along with the computer-readable instruction stored on the computer-readable storage medium. The dedicated circuitry may include a digital and/or an analog hardware circuit, or may include an integrated circuit (IC) and/or a discrete circuit. The programmable circuitry may include, for example, a reconfigurable hardware circuit including logical AND, logical OR, logical XOR, logical NAND, logical NOR, and other logical operations, and a flip-flop, a register, and a memory element, such as a field-programmable gate array (FPGA) and a programmable logic array (PLA).

The computer-readable storage medium may include any tangible device capable of storing an instruction performed by an appropriate device, so that the computer-readable storage medium having the instruction stored thereon constitutes a product including an instruction that may be performed in order to provide means for performing an operation specified by a flowchart or a block diagram. Examples of the computer-readable storage medium may include an electronic storage medium, a magnetic storage medium, an optical storage medium, an electromagnetic storage medium, a semiconductor storage medium, and the like. More specific examples of the computer-readable storage medium may include a floppy (registered trademark) disk, a diskette, a hard disk, a random access memory (RAM), a read only memory (ROM), an erasable programmable read only memory (EPROM or flash memory), an electrically erasable programmable read only memory (EEPROM), a static random access memory (SRAM), a compact disk read only memory (CD-ROM), a digital versatile disc (DVD), a Blu-ray (registered trademark) disc, a memory stick, an integrated circuit card, or the like.

The computer-readable instruction may include an assembler instruction, an instruction-set-architecture (ISA) instruction, a machine instruction, a machine dependent instruction, a microcode, a firmware instruction, state-setting data, or either of source code or object code written in any combination of one or more programming languages including an object-oriented programming language such as Smalltalk (registered trademark), JAVA (registered trademark), and C++, and a conventional procedural programming language such as a "C" programming language or a similar programming language.

The computer-readable instruction may be provided to a general purpose computer, a special purpose computer, or a processor or programmable circuitry of another programmable data processing apparatus locally or via a local area network (LAN), a wide area network (WAN) such as the Internet or the like in order that the general purpose computer, the special purpose computer, or the processor or the programmable circuitry of the other programmable data processing apparatus performs the computer-readable instruction to provide means for performing operations specified by the flowchart or the block diagram. Examples of the processor may include a computer processor, a processing unit, a microprocessor, a digital signal processor, a controller, a microcontroller, and the like.

While the present invention has been described by way of the embodiments, the technical scope of the present invention is not limited to the above-described embodiments. It is apparent to persons skilled in the art that various alterations or improvements can be added to the above-described embodiments. It is also apparent from the scope of the claims that the embodiments added with such alterations or improvements can be included in the technical scope of the present invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

10: system; 20: network; 100: laser device; 102: storage unit; 104: output unit; 106: receiving unit; 108: image capture unit; 109: band-pass filter; 110: control unit; 112: environmental information acquisition unit; 114: transmission unit; 150: laser light; 155: center; 200: moving object; 250: photovoltaic panel; 260: light source; 270: reflection plate; 300: laser device management device; 1200: computer; 1210: host controller; 1212: CPU; 1214: RAM; 1216: graphics controller; 1218: display device; 1220: input/output controller; 1222: communication interface; 1224: storage device; 1226: DVD drive; 1227: DVD-ROM; 1230: ROM; 1240: input/output chip; 1242: keyboard.

## Claims

1. A laser device (100) comprising:
an output unit (104) which is configured to output laser light (150);
a receiving unit (106) which is configured to receive position information indicating a position of a moving object (200);
an image capture unit (108) which is configured to capture an image of light from the moving object (200); and
a control unit (110) which is configured to control an output of the laser light (150) such that more of the laser light (150) is radiated to a photovoltaic panel (250) mounted on the moving object (200), based on the position of the moving object (200) indicated by the position information and a captured image that is captured by the image capture unit (108), wherein
the receiving unit (106) is configured to receive environmental information indicating an environment around the moving object (200),
the control unit (110) is configured to control the output of the laser light (150), further based on the environmental information, wherein the environmental information includes object information indicating a position of an object that exists around the moving object (200), and
the control unit (110) is further configured to control
a timing of outputting the laser light (150) such that the laser light (150) is not radiated to the object, when the object information indicates that the object exists around a path of the laser light (150), or
a beam diameter of the laser light (150) such that a size of the laser light (150) becomes smaller than a size of the photovoltaic panel (250) by a predetermined ratio, when the object information indicates that the object exists behind the moving object (200).

2. The laser device (100) according to claim 1, wherein the image capture unit (108) is configured to capture an image of the light emitted by a light source (260) installed at a position corresponding to the photovoltaic panel (250).

3. The laser device (100) according to claim 1 or 2, wherein the image capture unit (108) is configured to capture an image of the light obtained by a reflection plate (270) installed around the photovoltaic panel (250), reflecting the laser light (150).

4. The laser device (100) according to claim 3, wherein the image capture unit (108) is configured to capture an image of the light that has passed through a band-pass filter (109) which passes only light in a wavelength band in a predetermined range including a wavelength of the laser light (150).

5. The laser device (100) according to any one of claims 1 to 4, wherein the control unit (110) is configured to control a radiation direction of the laser light (150) such that a distance between a center (155) of the laser light (150) and a center (155) of the photovoltaic panel (250) becomes shorter.

6. The laser device (100) according to claim 5, wherein the control unit (110) is configured to control the radiation direction of the laser light (150), by analyzing the image of the captured image, and specifying a position of the center (155) of the photovoltaic panel (250).

7. The laser device (100) according to any one of claims 1 to 6, wherein the control unit (110) is configured to control a shape of the laser light (150) such that a shape error between the shape of the laser light (150) and a shape of the photovoltaic panel (250) becomes smaller.

8. The laser device (100) according to claim 7, wherein the control unit (110) is configured to control the shape of the laser light (150) to be an ellipse, and an aspect ratio and an orientation of the ellipse are able to be controlled by the control unit (110).

9. The laser device (100) according to any one of claims 1 to 8, wherein the control unit (110) is configured to control an intensity distribution of the laser light (150) such that the intensity distribution of the laser light (150) becomes more uniform on the photovoltaic panel (250).

10. The laser device (100) according to any one of claims 1 to 9, wherein the control unit (110) is configured to control at least one of a shape or an intensity distribution of the laser light (150) such that electric power generated by the photovoltaic panel (250) which has received the laser light (150), is maximized.

11. The laser device (100) according to any one of claims 1 to 10, wherein the control unit (110) is configured to control a beam diameter of the laser light (150) such that a ratio of a size of the laser light (150) to a size of the photovoltaic panel (250) becomes a predetermined ratio.

12. The laser device (100) according to any one of claims 1 to 11, wherein
the receiving unit (106) is further configured to receive movement speed information indicating a movement speed of the moving object (200), and movement direction information indicating a movement direction of the moving object (200), and
the control unit (110) is configured to control the output of the laser light (150) such that the laser light (150) tracks the photovoltaic panel (250), further based on the movement speed of the moving object (200) indicated by the movement speed information, and the movement direction of the moving object (200) indicated by the movement direction information.

13. The laser device (100) according to claim 12, wherein the control unit (110) is configured to determine a target ratio of a size of the laser light (150) to a size of the photovoltaic panel (250), based on a track result obtained by the laser light (150) tracking the photovoltaic panel (250); and to control a beam diameter of the laser light (150) such that the ratio of the size of the laser light (150) to the size of the photovoltaic panel (250) becomes the target ratio which has been determined.

14. A system comprising:
the laser device (100) according to any one of claims 1 to 13, and
the moving object (200).

15. A method which is executed by a computer (1200), the method comprising:
receiving position information indicating a position of a moving object (200);
capturing an image of light from the moving object (200);
controlling an output of laser light (150) such that more of the laser light (150) is radiated to a photovoltaic panel (250) mounted on the moving object (200), based on the position of the moving object (200) indicated by the position information and a captured image that is captured by the capturing the image;
receiving environmental information indicating an environment around the moving object (200),
controlling the output of the laser light (150), further based on the environmental information, wherein the environmental information includes object information indicating a position of an object that exists around the moving object (200), and
controlling a timing of outputting the laser light (150) such that the laser light (150) is not radiated to the object, when the object information indicates that the object exists around a path of the laser light (150), or
controlling a beam diameter of the laser light (150) such that a size of the laser light (150) becomes smaller than a size of the photovoltaic panel (250) by a predetermined ratio, when the object information indicates that the object exists behind the moving object (200).

## Patentansprüche

1. Laservorrichtung (100), aufweisend:
eine Ausgabeeinheit (104), die dafür konfiguriert ist, Laserlicht (150) auszugeben;
eine Empfangseinheit (106), die dafür konfiguriert ist, Positionsinformation zu empfangen, die eine Position eines sich bewegenden Objekts (200) anzeigt;
eine Bildaufnahmeeinheit (108), die dafür konfiguriert ist, ein Bild von Lichts von dem sich bewegenden Objekt (200) aufzunehmen; und
eine Steuereinheit (110), die dafür konfiguriert ist, die Ausgabe des Laserlichts (150) basierend auf der Position des sich bewegenden Objekts (200), die durch die Positionsinformation und ein durch die Bildaufnahmeeinheit (108) aufgenommenes Bild angezeigt wird, derart zu steuern, dass mehr von dem Laserlicht (150) auf ein Photovoltaikpanel (250) aufgestrahlt wird, das an dem sich bewegenden Objekt (200) montiert ist, wobei
die Empfangseinheit (106) dafür konfiguriert ist, Umgebungsinformation zu empfangen, die eine Umgebung um das sich bewegende Objekt (200) anzeigt,
die Steuereinheit (110) dafür konfiguriert ist, die Ausgabe des Laserlichts (150) ferner basierend auf der Umgebungsinformation zu steuern, wobei die Umgebungsinformation Objektinformation enthält, die eine Position eines Objekts anzeigt, das um das sich bewegende Objekt (200) herum vorhanden ist, und
die Steuereinheit (110) ferner dafür konfiguriert ist,
einen Zeitpunkt der Ausgabe des Laserlichts (150) derart zu steuern, dass das Laserlicht (150) nicht auf das Objekt abgestrahlt wird, wenn die Objektinformation anzeigt, dass das Objekt um einen Weg des Laserlichts (150) herum vorhanden ist, oder
einen Strahldurchmesser des Laserlichts (150) derart zu steuern, dass eine Größe des Laserlichts (150) in einem vorgegebenen Verhältnis kleiner wird als eine Größe des Photovoltaikpanels (250), wenn die Objektinformation anzeigt, dass das Objekt sich hinter dem sich bewegenden Objekt (200) befindet.

2. Laservorrichtung (100) nach Anspruch 1, wobei die Bildaufnahmeeinheit (108) dafür konfiguriert ist, ein Bild des Lichts aufzunehmen, das durch eine Lichtquelle (260) abgestrahlt wird, die an einer dem Photovoltaikmodul (250) entsprechenden Position installiert ist.

3. Laservorrichtung (100) nach Anspruch 1 oder 2, wobei die Bildaufnahmeeinheit (108) dafür konfiguriert ist, ein Bild des Lichts aufzunehmen, das durch eine um das Photovoltaikmodul (250) herum installierte Reflexionsplatte (270) erhalten wird, die das Laserlicht (150) reflektiert.

4. Laservorrichtung (100) nach Anspruch 3, wobei die Bildaufnahmeeinheit (108) dafür konfiguriert ist, ein Bild des Lichts aufzunehmen, das ein Bandpassfilter (109) durchlaufen hat, das nur Licht in einem Wellenlängenbereich in einem vorgegebenen Bereich einschließlich einer Wellenlänge des Laserlichts (150) durchlässt.

5. Laservorrichtung (100) nach einem der Ansprüche 1 bis 4, wobei die Steuereinheit (110) dafür konfiguriert ist, eine Strahlungsrichtung des Laserlichts (150) derart zu steuern, dass ein Abstand zwischen einer Mitte (155) des Laserlichts (150) und einer Mitte (155) des Photovoltaikmoduls (250) kürzer wird.

6. Laservorrichtung (100) nach Anspruch 5, wobei die Steuereinheit (110) dafür konfiguriert ist, die Strahlungsrichtung des Laserlichts (150) durch Analysieren des aufgenommenen Bildes und Spezifizieren einer Position der Mitte (155) des Photovoltaikmoduls (250) zu steuern.

7. Laservorrichtung (100) nach einem der Ansprüche 1 bis 6, wobei die Steuereinheit (110) dafür konfiguriert ist, eine Form des Laserlichts (150) derart zu steuern, dass ein Formfehler zwischen der Form des Laserlichts (150) und einer Form des Photovoltaikmoduls (250) kleiner wird.

8. Laservorrichtung (100) nach Anspruch 7, wobei die Steuereinheit (110) dafür konfiguriert ist, die Form des Laserlichts (150) so zu steuern, dass sie eine Ellipse ist, und wobei das Seitenverhältnis und die Ausrichtung der Ellipse durch die Steuereinheit (110) gesteuert werden können.

9. Laservorrichtung (100) nach einem der Ansprüche 1 bis 8, wobei die Steuereinheit (110) dafür konfiguriert ist, eine Intensitätsverteilung des Laserlichts (150) derart zu steuern, dass die Intensitätsverteilung des Laserlichts (150) auf dem Photovoltaikmodul (250) gleichmäßiger wird.

10. Laservorrichtung (100) nach einem der Ansprüche 1 bis 9, wobei die Steuereinheit (110) dafür konfiguriert ist, mindestens eine Form oder eine Intensitätsverteilung des Laserlichts (150) derart zu steuern, dass die durch das Photovoltaikmodul (250), das das Laserlicht (150) empfangen hat, erzeugte elektrische Leistung maximal wird.

11. Laservorrichtung (100) nach einem der Ansprüche 1 bis 10, wobei die Steuereinheit (110) dafür konfiguriert ist, einen Strahldurchmesser des Laserlichts (150) derart zu steuern, dass ein Verhältnis der Größe des Laserlichts (150) zur Größe des Photovoltaikmoduls (250) ein vorgegebenes Verhältnis wird.

12. Laservorrichtung (100) nach einem der Ansprüche 1 bis 11, wobei die Empfangseinheit (106) ferner dafür konfiguriert ist, Bewegungsgeschwindigkeitsinformation, die eine Bewegungsgeschwindigkeit des sich bewegenden Objekts (200) anzeigt, und Bewegungsrichtungsinformation, die eine Bewegungsrichtung des sich bewegenden Objekts (200) anzeigt, zu empfangen, und die Steuereinheit (110) dafür konfiguriert ist, die Ausgabe des Laserlichts (150) ferner basierend auf der durch die Bewegungsgeschwindigkeitsinformation angezeigten Bewegungsgeschwindigkeit des sich bewegenden Objekts (200) und der durch die Bewegungsrichtungsinformation angezeigten Bewegungsrichtung des sich bewegenden Objekts (200) derart zu steuern, dass das Laserlicht (150) dem Photovoltaikmodul (250) folgt.

13. Laservorrichtung (100) nach Anspruch 12, wobei die Steuereinheit (110) dafür konfiguriert ist, ein Soll-Verhältnis zwischen einer Größe des Laserlichts (150) und einer Größe des Photovoltaikmoduls (250) basierend auf einem Verfolgungsergebnis zu bestimmen, das durch das Verfolgen des Photovoltaikmoduls (250) durch das Laserlicht (150) erhalten wird; und einen Strahldurchmesser des Laserlichts (150) derartzu steuern, dass das Verhältnis zwischen der Größe des Laserlichts (150) und der Größe des Photovoltaikmoduls (250) das bestimmte Soll-Verhältnis erreicht.

14. System, aufweisend:
die Laservorrichtung (100) nach einem der Ansprüche 1 bis 13 und das sich bewegende Objekt (200).

15. Verfahren, das durch einen Computer (1200) ausgeführt wird, wobei das Verfahren aufweist:
Empfangen von Positionsinformationen, die eine Position eines sich bewegenden Objekts (200) anzeigt;
Aufnehmen eines Bildes von Licht von dem sich bewegenden Objekt (200);
Steuern einer Ausgabe von Laserlicht (150) derart, dass mehr Laserlicht (150) auf ein auf dem sich bewegenden Objekt (200) montiertes Photovoltaikpanel (250) abgestrahlt wird, basierend auf der durch die Positionsinformationen angezeigten Position des sich bewegenden Objekts (200) und einem aufgenommenen Bild, das durch dasAufnehmen des Bildes aufgenommen wurde;
Empfangen von Umgebungsinformationen, die eine Umgebung um das sich bewegende Objekt (200) herum anzeigt;
Steuern der Abgabe des Laserlichts (150) ferner basierend auf der Umgebungsinformation, wobei die Umgebungsinformation Objektinformation enthält, die eine Position eines Objekts anzeigt, das um das sich bewegende Objekt (200) herum vorhanden ist; und
Steuern eines Zeitpunkts der Ausgabe des Laserlichts (150) derart, dass das Laserlicht (150) nicht auf das Objekt abgestrahlt wird, wenn die Objektinformation anzeigt, dass das Objekt um einen Weg des Laserlichts (150) herum vorhanden ist; oder
Steuern eines Strahldurchmessers des Laserlichts (150) derart, dass eine Größe des Laserlichts (150) in einem vorgegebenen Verhältnis kleiner wird als eine Größe des Photovoltaikpanels (250), wenn die Objektinformation anzeigt, dass das Objekt sich hinter dem sich bewegenden Objekt (200) befindet.

## Revendications

1. Dispositif laser (100) comprenant :
une unité d'émission (104) qui est configurée pour émettre une lumière laser (150) ;
une unité de réception (106) qui est configurée pour recevoir des informations de position indiquant une position d'un objet en mouvement (200) ;
une unité de capture d'image (108) qui est configurée pour capturer une image de lumière depuis l'objet en mouvement (200) ; et
une unité de commande (110) qui est configurée pour commander une émission de la lumière laser (150) de telle sorte qu'une quantité supérieure de la lumière laser (150) est rayonnée vers un panneau photovoltaïque (250) monté sur l'objet en mouvement (200), en se basant sur la position de l'objet en mouvement (200) indiquée par les informations de position et une image capturée qui est capturée par l'unité de capture d'image (108), dans lequel
l'unité de réception (106) est configurée pour recevoir des informations environnementales indiquant un environnement autour de l'objet en mouvement (200),
l'unité de commande (110) est configurée pour commander l'émission de la lumière laser (150), en se basant en outre sur les informations environnementales, dans lequel les informations environnementales incluent des informations d'objet indiquant une position d'un objet qui existe autour de l'objet en mouvement (200), et
l'unité de commande (110) est en outre configurée pour commander
une synchronisation de l'émission de la lumière laser (150) de telle sorte que la lumière laser (150) n'est pas rayonnée vers l'objet, lorsque les informations d'objet indiquent que l'objet existe autour d'un trajet de la lumière laser (150), ou
un diamètre de faisceau de la lumière laser (150) de telle sorte qu'une taille de la lumière laser (150) devient inférieure à une taille du panneau photovoltaïque (250) d'un rapport prédéterminé, lorsque les informations d'objet indiquent que l'objet existe derrière l'objet en mouvement (200).

2. Dispositif laser (100) selon la revendication 1, dans lequel l'unité de capture d'image (108) est configurée pour capturer une image de la lumière émise par une source lumineuse (260) installée au niveau d'une position correspondant au panneau photovoltaïque (250).

3. Dispositif laser (100) selon la revendication 1 ou 2, dans lequel l'unité de capture d'image (108) est configurée pour capturer une image de la lumière obtenue par une plaque de réflexion (270) installée autour du panneau photovoltaïque (250), réfléchissant la lumière laser (150).

4. Dispositif laser (100) selon la revendication 3, dans lequel l'unité de capture d'image (108) est configurée pour capturer une image de lumière qui est passée à travers un filtre passe-bande (109) qui fait passer uniquement la lumière dans une bande de longueur d'onde d'une plage prédéterminée incluant une longueur d'onde de la lumière laser (150).

5. Dispositif laser (100) selon l'une quelconque des revendications 1 à 4, dans lequel l'unité de commande (110) est configurée pour commander une direction de rayonnement de la lumière laser (150) de telle sorte qu'une distance entre un centre (155) de la lumière laser (150) et un centre (155) du panneau photovoltaïque (250) devient plus courte.

6. Dispositif laser (100) selon la revendication 5, dans lequel l'unité de commande (110) est configurée pour commander la direction de rayonnement de la lumière laser (150), en analysant l'image de l'image capturée, et en spécifiant une position du centre (155) du panneau photovoltaïque (250).

7. Dispositif laser (100) selon l'une quelconque des revendications 1 à 6, dans lequel l'unité de commande (110) est configurée pour commander une forme de la lumière laser (150) de telle sorte qu'une erreur de forme entre la forme de la lumière laser (150) et une forme du panneau photovoltaïque (250) devient plus petite.

8. Dispositif laser (100) selon la revendication 7, dans lequel l'unité de commande (110) est configurée pour commander que la forme de la lumière laser (150) soit une ellipse, et un rapport d'aspect et une orientation de l'ellipse peuvent être commandés par l'unité de commande (110).

9. Dispositif laser (100) selon l'une quelconque des revendications 1 à 8, dans lequel l'unité de commande (110) est configurée pour commander une distribution d'intensité de la lumière laser (150) de telle sorte que la distribution d'intensité de la lumière laser (150) devient plus uniforme sur le panneau photovoltaïque (250).

10. Dispositif laser (100) selon l'une quelconque des revendications 1 à 9, dans lequel l'unité de commande (110) est configurée pour commander au moins une parmi une forme ou une distribution d'intensité de la lumière laser (150) de telle sorte que la puissance électrique générée par le panneau photovoltaïque (250) qui a reçu la lumière laser (150) est maximisée.

11. Dispositif laser (100) selon l'une quelconque des revendications 1 à 10, dans lequel l'unité de commande (110) est configurée pour commander un diamètre de faisceau de la lumière laser (150) de telle sorte qu'un rapport d'une taille de la lumière laser (150) à une taille du panneau photovoltaïque (250) devient un rapport prédéterminé.

12. Dispositif laser (100) selon l'une quelconque des revendications 1 à 11, dans lequel
l'unité de réception (106) est en outre configurée pour recevoir des informations de vitesse de mouvement indiquant une vitesse de mouvement de l'objet en mouvement (200), et des informations de direction de mouvement indiquant une direction de mouvement de l'objet en mouvement (200), et
l'unité de commande (110) est configurée pour commander l'émission de la lumière laser (150) de telle sorte que la lumière laser (150) suit le panneau photovoltaïque (250), en outre en se basant sur la vitesse de mouvement de l'objet en mouvement (200) indiquée par les informations de vitesse de mouvement, et la direction de mouvement de l'objet en mouvement (200) indiquée par les informations de direction de mouvement.

13. Dispositif laser (100) selon la revendication 12, dans lequel l'unité de commande (110) est configurée pour déterminer un rapport cible d'une taille de la lumière laser (150) à une taille du panneau photovoltaïque (250), en se basant sur un résultat de suivi obtenu par le fait que la lumière laser (150) suit le panneau photovoltaïque (250) ; et pour commander un diamètre de faisceau de la lumière laser (150) de telle sorte que le rapport de la taille de la lumière laser (150) à la taille du panneau photovoltaïque (250) devient le rapport cible qui a été déterminé.

14. Système comprenant :
le dispositif laser (100) selon l'une quelconque des revendications 1 à 13, et
l'objet en mouvement (200).

15. Procédé qui est exécuté par un ordinateur (1200), le procédé comprenant les étapes consistant à :
recevoir des informations de position indiquant une position d'un objet en mouvement (200) ;
capturer une image de lumière de l'objet en mouvement (200) ;
commander une émission de lumière laser (150) de telle sorte qu'une quantité supérieure de la lumière laser (150) est rayonnée vers un panneau photovoltaïque (250) monté sur l'objet en mouvement (200), en se basant sur la position de l'objet en mouvement (200) indiquée par les informations de position et une image capturée qui est capturée par la capture de l'image ;
recevoir des informations environnementales indiquant un environnement autour de l'objet en mouvement (200),
commander l'émission de la lumière laser (150), en se basant en outre sur les informations environnementales, dans lequel les informations environnementales incluent des informations d'objet indiquant une position d'un objet qui existe autour de l'objet en mouvement (200), et
commander une synchronisation de l'émission de la lumière laser (150) de telle sorte que la lumière laser (150) n'est pas rayonnée vers l'objet, lorsque les informations d'objet indiquent que l'objet existe autour d'un trajet de la lumière laser (150), ou
commander un diamètre de faisceau de la lumière laser (150) de telle sorte qu'une taille de la lumière laser (150) devient inférieure à une taille du panneau photovoltaïque (250) d'un rapport prédéterminé, lorsque les informations d'objet indiquent que l'objet existe derrière l'objet en mouvement (200).
